# EUROPÄISCHE PATENTANMELDUNG

(11) **EP 1 736 808 A2**
(43) Veröffentlichungstag der Anmeldung: **27.12.2006**
(21) Anmeldenummer: 06010603.6
(22) Anmeldetag: 23.05.2006
(51) Int. Cl.: G02B 6/44, G02B 6/54

(54) **Vorrichtung zur Abfangung von in Mikroducts geführten Mikrokabeln sowie der Mikroducts**

(30) Priorität: 22.06.2005 DE 202005009930 U
(71) Anmelder: CCS Technology, Inc., Wilmington, DE 19803 (US)
(72) Erfinder: Syplacz, Roman, 58099 Hagen (DE)
(74) Vertreter: Sturm, Christoph

(57) **Zusammenfassung**

Die Erfindung betrifft eine Vorrichtung zur Abfangung von in Mikroducts bzw. Miniducts geführten Mikrokabeln bzw. Minikabeln sowie der Mikroducts bzw. Miniducts, wobei in jedem Mikroduct jeweils ein Mikrokabel aufgenommen ist, mit einem Klemmelement (16) zum Einklemmen und damit zur Abfangung, insbesondere zur Zugabfangung und Torsionsabfangung, mindestens eines Mikroducts (17), und mit einem zwischen dem oder jedem Mikroduct (17) sowie dem im jeweiligen Mikroduct (17) aufgenommenen Mikrokabel (18) positionierten Kraftübertragungselement (24), welches bei Klemmung des oder jedes Mikroducts (17) im Klemmelement (16) eine Klemmkraft auf das im jeweiligen Mikroduct (17) aufgenommenen Mikrokabel (18) überträgt und so eine gleichzeitige Abfangung, insbesondere Zugabfangung und Torsionsabfangung, von Mikroduct (17) und Mikrokabel (18) bewirkt.

## Beschreibung

Die Erfindung betrifft eine Vorrichtung zur Abfangung von in Mikroducts geführten Mikrokabein sowie der Mikroducts.

Aus dem Stand der Technik ist es bereits bekannt, Lichtwellenleiterkabeinetze aus in Verlegeröhrchen - sogenannten Mikroducts bzw. Miniducts ― geführten Mikrokabein bzw. Minikabeln aufzubauen. Derartige Mikrokabel bzw. Minikabel verfügen über einen Außendurchmesser bis max. in etwa 7 mm und werden üblicherweise in die Mikroducts eingeblasen. In jedem Mikroduct verläuft dabei maximal ein Mikrokabel.

Beim Aufbau von Lichtwellenleiterkabelnetzen ist es erforderlich, sogenannte Verbindungsstellen bzw. Abzweigstellen für die Mikrokabel vorzusehen, wobei an den Verbindungsstellen bzw. Abzweigstellen Spleiße zwischen in Mikrokabeln geführten Lichtwellenleitem ausgebildet werden. Zum Schutz der Spleißverbindungen an den Verbindungsstellen bzw. Abzweigstellen werden die Spleißverbindungen in sogenannten Kabelmuffen abgelegt, wobei bei aus in Mikroducts geführten Mikrokabeln aufgebauten Lichtwellenleiterkabelnetzen sowohl die Mikroducts als auch die Mikrokabel in eine Kabelmuffe eingeführt und innerhalb der Kabelmuffe gegenüber einer Zugbeanspruchung sowie gegebenenfalls auch Torsionsbeanspruchung abgefangen werden müssen. Bislang sind aus dem Stand der Technik keine Vorrichtungen bekannt, mit denen in Mikroducts geführte Mikrokabel effektiv abgefangen werden können.

Hiervon ausgehend liegt der vorliegenden Erfindung das Problem zu Grunde, eine neuartige Vorrichtung zur Abfangung von in Mikroducts geführten Mikrokabeln sowie der Mikroducts zu schaffen.

Dieses Problem wird eine Vorrichtung zur Abfangung von in Mikroducts geführten Mikrokabeln sowie der Mikroducts gemäß Anspruch 1 gelöst. Erfindungsgemäß weist die Vorrichtung ein Klemmelement zum Einklemmen und damit zur Abfangung, insbesondere zur Zugabfangung und Torsionsabfangung, mindestens eines Mikroducts und ein zwischen dem oder jedem Mikroduct sowie dem im jeweiligen Mikroduct aufgenommenen Mikrokabel positioniertes Kraftübertragungselement auf, welches bei Klemmung des oder jedes Mikroducts im Klemmelement eine über das Klemmelement aufgebrachte Klemmkraft auf das im jeweiligen Mikroduct aufgenommenen Mikrokabel überträgt und so eine gleichzeitige Abfangung, insbesondere Zugabfangung und Torsionsabfangung, von Mikroduct und Mikrokabel bewirkt.

Im Sinne der hier vorliegenden Erfindung wird eine Vorrichtung zur Abfangung von in Mikroducts geführten Mikrokabeln vorgeschlagen, bei welcher mindestens ein Mikroduct in einer Klemmeinrichtung fixierbar ist, und wobei die zur Zugabfangung und Torsionsabfangung des Mikroducts vom Klemmelement auf den Mikroduct ausgeübte Klemmkraft über ein zwischen dem Mikroduct und dem im jeweiligen Mikroduct verlaufenden Mikrokabel positioniertes Kraftübertragungselement auf das jeweilige Mikrokabel übertragbar ist, so dass über die vom Klemmelement aufgebrachte Klemmkraft eine gleichzeitige Zugabfangung und Torsionsabfangung von Mikroduct und Mikrokabel bereitgestellt werden kann. Im Sinne der hier vorliegenden Erfindung erfolgt demnach eine gleichzeitige, verdrehsichere Abfangung von Mikroducts und von in den Mikroducts geführten Mikrokabeln über das Klemmelement, wobei die vom Klemmelement aufgebrachte Klemmkraft einerseits unmittelbar auf die Mikroducts einwirkt und andererseits über entsprechende Kraftübertragungselemente, die zwischen einem Mikroduct sowie dem darin geführten Mikrokabel positioniert sind, mittelbar auf die Mikrokabel einwirkt.

Vorzugsweise ist das zwischen einem Mikroduct und dem im Mikroduct aufgenommenen Mikrokabel positionierte Kraftübertragungselement aus zwei Krallenblechen gebildet, wobei jedes Krallenblech nach radial innen gerichtete, mit dem Mikrokabel zusammenwirkende krallenartige Vorsprünge aufweist, welche die Klemmkraft auf das Mikrokabel übertragen.

Nach einer vorteilhaften Weiterbildung der Erfindung ist das Klemmelement für die Mikroducts an einem Lagerungsmodul einer Lagerungseinrichtung befestigbar, um die Vorrichtung zur Abfangung von in Mikroducts bzw. Miniducts geführten Mikrokabeln bzw. Minikabeln über das Lagerungsmodul bzw. die Lagerungseinrichtung an einer Lichtwellenleiterverteilereinrichtung, insbesondere an einem Dichtkörper einer Kabelmuffe, zu lagern.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: eine perspektivische Ansicht einer erfindungsgemäßen Vorrichtung zur Abfangung von in Mikroducts geführten Mikrokabeln sowie der Mikroducts zusammen mit einer Lagerungseinrichtung zur Lagerung der erfindungsgemäßen Vorrichtung an einer Lichtwellenleiterverteilereinrichtung;
- Fig. 2:: die Anordnung gemäß Fig. 1 in einer teilweisen Explosionsdarstellung;
- Fig. 3:: einen Ausschnitt aus der erfindungsgemäßen Vorrichtung im Bereich eines in einem Mikroduct geführten Mikrokabels;
- Fig. 4:: die Anordnung der Fig. 1 in einer ersten Montageposition;
- Fig. 5:: die Anordnung der Fig. 1 in einer zweiten Montageposition; und
- Fig. 6 bis 9:: ein Detail der erfindungsgemäßen Vorrichtung in unterschiedlichen Darstellungen.

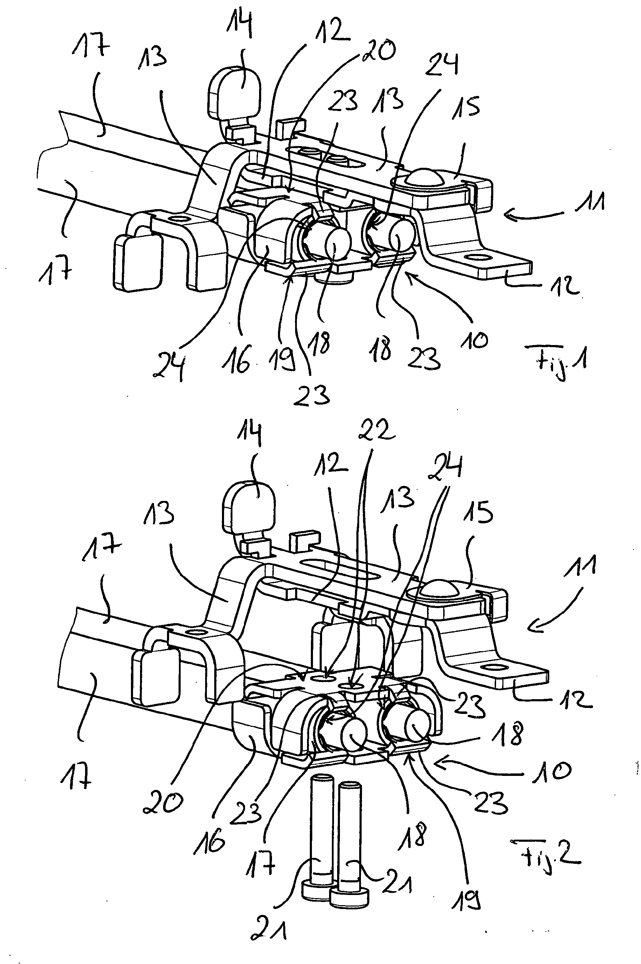

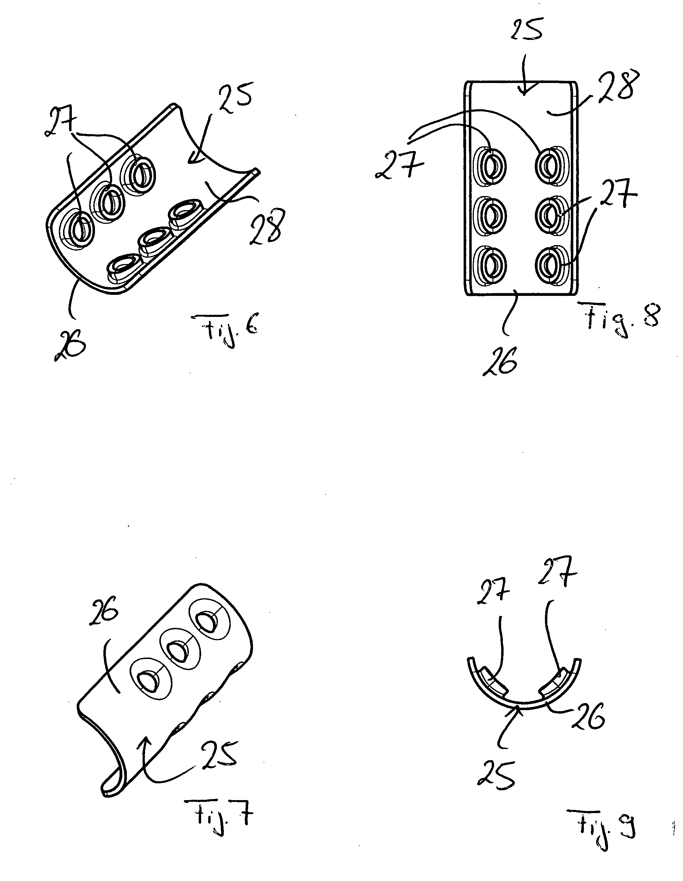

Fig. 1 bis 9 zeigen ein Ausführungsbeispiel einer erfindungsgemäßen Vorrichtung 10 zur Zugabfangung von in Mikroducts geführten Mikrokabein sowie der Mikroducts zusammen mit einer Lagerungseinrichtung 11, über welche die erfindungsgemäße Vorrichtung 10 an einer Lichtwellenleiterverteilereinrichtung, vorzugsweise an einem Dichtkörper einer Kabelmuffe, gelagert werden kann.

Die Lagerungseinrichtung 11 wird aus zwei Baugruppen gebildet, nämlich aus einem Lagerungsmodul 12 und einer Lagerungsbasis 13. Über das Lagerungsmodul 12 ist die erfindungsgemäße Vorrichtung 10 zur Abfangung von in Mikroducts geführten Mikrokabeln an der Lagerungseinrichtung 11 befestigbar. Über die Lagerungsbasis 13 hingegen ist die Lagerungseinrichtung 11 zusammen mit der erfindungsgemäßen Vorrichtung 10 an der Lichtwellenleiterverteilereinrichtung, vorzugsweise am Dichtkörper einer Kabelmuffe, lagerbar, wobei hierzu ein Vorsprung 14 der Lagerungsbasis 13 in eine auf einer Innenseite des Dichtkörpers einer Kabelmuffe positionierte Führung eingreift. Das Lagerungsmodul 12 sowie die Lagerungsbasis 13 der Lagerungseinrichtung 11 sind über ein Verbindungselement 15 miteinander verbindbar, welches im gezeigten Ausführungsbeispiel als Drehclip ausgeführt ist. An dieser Stelle sei darauf hingewiesen, dass die Lagerungseinrichtung 11, die vom Lagerungsmodul 12 und der Lagerungsbasis 13 gebildet wird, lediglich der Lagerung bzw. Anbindung der erfindungsgemäßen Vorrichtung 10 zur Abfangung von in Mikroducts geführten Mikrokabeln sowie der Mikroducts in einer bzw. an einer vorzugsweise als Kabelmuffe ausgebildeten Lichtwellenleiterverteilereinrichtung dient.

Die erfindungsgemäße Vorrichtung 10 zur Abfangung von in Mikroducts geführten Mikrokabeln sowie der Mikroducts verfügt über ein Klemmelement 16, in welchem im gezeigten Ausführungsbeispiel zwei Mikroducts 17 mit in den Mikroducts 17 geführten Mikrokabeln 18 geklemmt bzw. fixiert werden können. Es sei darauf hingewiesen, dass selbstverständlich auch Klemmelemente vorgesehen werden können, in denen mehr als zwei Mikroducts 17 mit darin geführten Mikrokabeln 18 klemmbar bzw. fixierbar sind.

Das Klemmelement 16 der erfindungsgemäßen Vorrichtung 10 wird im gezeigten Ausführungsbeispiel von zwei Klemmelementhälften 19 und 20 gebildet, die über Schrauben 21 einerseits miteinander und andererseits mit dem Lagerungsmodul 12 der Lagerungseinrichtung 11 verschraubt werden können. Hierzu sind in die Klemmelementhälften 19 und 20 sowie in das Lagerungsmodul 12 der Lagerungseinrichtung 11 Bohrungen integriert, durch welche sich die Schrauben 21 erstrecken. In der Darstellung der Fig. 2 sind lediglich die in die Klemmelementhälfte 20 integrierten Bohrungen 22 erkennbar. Vorzugsweise sind die in das Lagerungsmodul 12 der Lagerungseinrichtung 11 integrierten Bohrungen als Gewindebohrungen ausgeführt, die mit entsprechenden Gegengewinden der Schrauben 21 zusammenwirken und so für eine Verschraubbarkeit des Klemmelements 16 mit der Lagerungseinrichtung 11, nämlich dem Lagerungsmodul 12 derselben, sorgen. Durch die Verschraubung kann eine Klemmkraft bereitgestellt werden, um die Mikroducts 17 im Klemmelement 16 zu fixieren und so eine Zugabfangung und Torsionsabfangung der Mikroducts 17 im Klemmelement 16 zu bewirken. Wie Fig. 1 und 2 entnommen werden kann, verfügen die Klemmelementhälften 19 und 20 über nasenartige Vorsprünge 23, welche in montierter Position die Mikroducts 17 abschnittsweise umgreifen und so die Lage derselben im Klemmelement 16 fixiert.

Im Sinne der hier vorliegenden Erfindung sind zwischen den Mikroducts 17 und den in den Mikroducts 17 geführten Mikrokabeln 18 Kraftübertragungselemente 24 positioniert. Dies kann am besten Fig. 3 bis 5 entnommen werden. Über die zwischen den Mikroducts 17 und den Mikrokabeln 18 positionierten Kraftübertragungselemente 24 ist die vom Klemmelement 16 zur Klemmung der Mikroducts 17 bereitgestellte Klemmkraft auf die Mikrokabel 18 übertragbar, um so eine gleichzeitige Zugabfangung und Torsionsabfangung von Mikroducts 17 und Mikrokabeln 18 im Klemmelement 16 bzw. der erfindungsgemäßen Vorrichtung 10 zu bewirken.

Es liegt demnach im Sinne der hier vorliegenden Erfindung, dass die vom Klemmelement 16 bereitgestellte bzw. die über das Klemmelement 16 aufgebrachte Klemmkraft einerseits zur Abfangung der Mikroducts 17 und andererseits zur Abfangung der in den Mikroducts 17 geführten Mikrokabeln 18 verwendet wird. Die Kraftübertragungselemente 24 dienen dabei der Übertragung der Klemmkraft auf die Mikrokabel 18.

Die Kraftübertragungselemente 24 werden im gezeigten Ausführungsbeispiel jeweils von zwei Krallenblechen 25 gebildet. Fig. 6 bis 9 zeigen ein derartiges Krallenblech 25 in unterschiedlichen Ansichten. Die Krallenbleche 25 verfügen über eine kreissegmentförmige Wand 26, wobei sich ausgehend von dieser Wand 26 nach radial innen krallenartige Vorsprünge 27 erstrecken. Die krallenartigen Vorsprünge 27 liegen in montierter Position auf einer äußeren Oberfläche des Mikrokabels 18 auf und übertragen letztendlich die vom Klemmelement 16 bereitgestellte Klemmkraft auf das Mikrokabel 18.

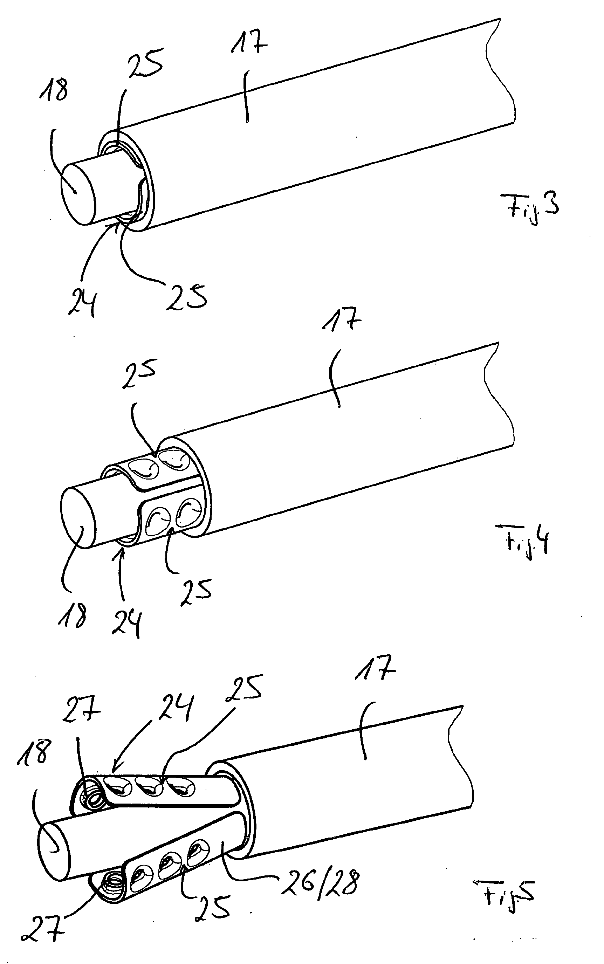

Um bei der Montage der erfindungsgemäßen Vorrichtung 10 die Einführung der Krallenbleche 25 zwischen einem Mikroduct 17 und einem Mikrokabel 18 zu erleichtern, sind in einem Endabschnitt 28 der Wand 26 der Krallenbleche 25 keine krallenartigen Vorsprünge 27 positioniert. Hierdurch ist es möglich, die Krallenbleche 25 über diesen Endabschnitt 28 in der in Fig. 5 dargestellten Position zwischen einem Mikroduct 17 und ein im Mikroduct 17 geführtes Mikrokabel 18 einzufädeln, wobei dann unter Etablierung einer Relativbewegung zwischen dem Mikroduct 17 und dem darin geführten Mikrokabel 18 die Krallenbleche 25 sukzessive gemäß Fig. 3 und 4 zwischen einen Mikroduct 17 und ein Mikrokabel 18 eingeführt werden können.

### Bezugszeichenliste

- 10: Vorrichtung
- 11: Lagerungseinrichtung
- 12: Lagerungsmodul
- 13: Lagerungsbasis
- 14: Vorsprung
- 15: Verbindungselement
- 16: Klemmelement
- 17: Mikroduct
- 18: Mikrokabel
- 19: Klemmelementhälfte
- 20: Klemmelementhälfte
- 21: Schraube
- 22: Bohrung
- 23: Vorsprung
- 24: Kraftübertragungselement
- 25: Krallenblech
- 26: Wand
- 27: Vorsprung
- 28: Endabschnitt

## Patentansprüche

1. Vorrichtung zur Abfangung von in Mikroducts bzw. Miniducts geführten Mikrokabeln bzw. Minikabeln sowie der Mikroducts bzw. Miniducts, wobei in jedem Mikroduct jeweils ein Mikrokabel aufgenommen ist, mit einem Klemmelement (16) zum Einklemmen und damit zur Abfangung mindestens eines Mikroducts (17), und mit einem zwischen dem oder jedem Mikroduct (17) sowie dem im jeweiligen Mikroduct (17) aufgenommenen Mikrokabel (18) positionierten Kraftübertragungselement (24), welches bei Klemmung des oder jedes Mikroducts (17) im Klemmelement (16) eine Klemmkraft auf das im jeweiligen Mikroduct (17) aufgenommenen Mikrokabel (18) überträgt und so eine gleichzeitige Abfangung von Mikroduct (17) und Mikrokabel (18) bewirkt.

2. Vorrichtung nach Anspruch 1, **dadurch gekennzeichnet, dass** das zwischen einem Mikroduct (17) und dem im Mikroduct (17) aufgenommenen Mikrokabel (18) positionierte Kraftübertragungselement (24) aus vorzugsweise zwei Krallenblechen (25) gebildet ist, wobei jedes Krallenblech (25) nach radial innen gerichtete, mit dem Mikrokabel (18) zusammenwirkende krallenartige Vorsprünge (27) aufweist, welche die Klemmkraft auf das Mikrokabel (18) übertragen.

3. Vorrichtung nach Anspruch 1 oder 2, **dadurch gekennzeichnet, dass** das die Krallenbleche (25) in einem Endabschnitt (28) derselben keine krallenartige Vorsprünge (27) aufweisen, um das Einführen der Krallenbleche (25) zwischen einen Mikroduct (17) sowie das im Mikroduct (27) aufgenommene Mikrokabel (18) zu erleichtern.

4. Vorrichtung nach Anspruch 2 oder 3, **dadurch gekennzeichnet, dass** die Krallenbleche (25) eine kreissegmentförmige Wand (26) aufweisen, wobei sich die krallenartige Vorsprünge (27) ausgehend von der Wand (26) nach radial innen erstrecken.

5. Vorrichtung nach einem oder mehreren der Ansprüche 1 bis 4, **dadurch gekennzeichnet, dass** das Klemmelement (16) für die Mikroducts (17) an einem Lagerungsmodul (12) einer Lagerungseinrichtung (11) befestigbar ist, um die Vorrichtung zur Abfangung von in Mikroducts bzw. Miniducts geführten Mikrokabeln bzw. Minikabeln über das Lagerungsmodul (12) bzw. die Lagerungseinrichtung (11) an einer Lichtwellenleiterverteilereinrichtung, insbesondere an einem Dichtkörper einer Kabelmuffe, zu lagern.

6. Vorrichtung nach Anspruch 5, **dadurch gekennzeichnet, dass** das Klemmelement (16) mit dem Lagerungsmodul (12) der Lagerungseinrichtung (11) verschraubbar ist.

7. Vorrichtung nach einem oder mehreren der Ansprüche 1 bis 6, **dadurch gekennzeichnet, dass** das Klemmelement (16) für die Mikroducts (17) Vorsprünge (23) aufweist, die in dem Klemmelement (16) geklemmte Mikroducts (17) abschnittsweise umgreifen.
